# EUROPEAN PATENT APPLICATION

(11) **EP 2 498 051 A2**
(43) Date of publication of application: **12.09.2012**
(21) Application number: 11175603.7
(22) Date of filing: 27.07.2011
(51) Int. Cl.: G01C 19/5712, G01P 15/08

(54) **Inertial sensor**

(30) Priority: 09.03.2011 KR 20110021011
(71) Applicant: Samsung Electro-Mechanics Co., Ltd, Suwon Gyunggi-do 443-743 (KR)
(72) Inventor: Lim, Jun, 445-320 Gyunggi-do (KR); Yi, Yu Heon, 133-767 Seoul (KR)
(74) Representative: Heine, Christian Klaus

(57) **Abstract**

Disclosed herein is an inertial sensor including: a driving body displaceably supported on a flexible substrate part in a floating state; a displacement detection unit having a sensing electrode detecting displacement of the driving body; a vibrating part having a vibrating electrode vibrating the driving body; a differential amplifier connected to the sensing electrode and the vibrating electrode, and a circuit unit connected to the differential amplifier to calculate acceleration and angular velocity, wherein the acceleration is calculated by using the sensing electrode and the vibrating electrode.

## Description

### CROSS REFERENCE TO RELATED APPLICATION

This application claims the benefit of Korean Patent Application No. 10-2011-0021011, filed on March 9, 2011, entitled "Inertial Sensor", which is hereby incorporated by reference in its entirety into this application.

### BACKGROUND OF THE INVENTION

### 1. Technical Field

The present invention relates to an inertial sensor.

### 2. Description of the Related Art

Recently, since a compact and light inertial sensor is easily manufactured using an MEMS technology, the inertial sensor has been expanded to applications such as home appliances, etc. Therefore, with the continuous development of functions of the inertial sensor, the function of the inertial sensor is being continuously developed from a uniaxial sensor capable of detecting only an inertial force of a single axis using a single sensor to a multi-axis sensor capable of detecting an inertial force of a multi-axis having two axes or more using a single sensor.

In more detail, the inertial sensor according to the prior art includes a flexible substrate part, a driving body, and a support part, wherein the flexible substrate part is provided with a sensing electrode for detecting displacement of the driving body and a vibrating electrode for vibrating the driving body and in order for the single inertial sensor to measure acceleration and angular velocity, the measurement of the acceleration and the angular velocity is implemented by a time division manner. Further, when the angular velocity is applied in a second axis direction of the driving body in a state in which the driving body is vibrated in a first axis direction by applying voltage to the vibrating electrode, Coriolis force is applied in a third axis direction and charges having specific polarity are generated in the sensing electrode, such that the direction and magnitude of the angular velocity may be measured by detecting the charges.

In addition, when acceleration is applied to the flexible substrate part, warpage of the flexible part is generated and charges having specific polarity are generated in the sensing electrode, such that the direction and magnitude of the acceleration may be measured by detecting the charges.

Therefore, the measurement of the acceleration and the angular velocity is implemented by a time division manner and there is no need to vibrate the driving body at the time of measuring the acceleration, such that the vibrating electrode is left in a state in which it does not perform any action. As a result, there is a problem in that the technology configuration of the inertial sensor measuring the acceleration and the angular velocity is inefficient.

### SUMMARY OF THE INVENTION

The present invention has been made in an effort to provide an inertial sensor capable of improving sensitivity for measuring acceleration by using a vibrating electrode in addition to a sensing electrode at the time of detecting the acceleration.

According to a preferred embodiment of the present invention, there is provided an inertial sensor, including: a driving body displaceably supported on a flexible substrate part in a floating state; a displacement detection unit having a sensing electrode detecting displacement of the driving body; a vibrating part having a vibrating electrode vibrating the driving body; a differential amplifier connected to the sensing electrode and the vibrating electrode; and a circuit unit connected to the differential amplifier to calculate acceleration and angular velocity, wherein the acceleration is calculated by using the sensing electrode and the vibrating electrode.

The vibrating electrode may include first and second vibrating electrodes in an X-axis direction and first and second vibrating electrodes in a Y-axis direction and the sensing electrode may include first and second sensing electrodes in the X-axis direction and first and second sensing electrodes in the Y-axis direction, signals of the vibrating electrode and the sensing electrode may be each transferred to first and second terminals of the differential amplifier, and the differential amplifier may amplify a signal difference and transfer the amplified signal difference to the circuit unit to calculate acceleration in the X-axis, Y-axis, and Z-axis directions.

The signals of the first vibrating electrode and the second sensing electrode in the X-axis direction may be coupled to be transferred to the first terminal of the differential amplifier, the signals of the second vibrating electrode and the first sensing electrode may be coupled to be transferred to the second terminal of the differential amplifier, and the differential amplifier may amplify two signal differences and transfer the two amplified signal differences to the circuit unit to calculate the acceleration in the X-axis direction.

The acceleration in the X-axis direction due to the difference value of the differential amplifier may be Ax=(SX1+DX2)-(SX2+DX1), where SX1 is the first sensing electrode, DX2 is the second vibrating electrode, SX2 is the second sensing electrode, and DX1 is the first vibrating electrode. The signals of the first vibrating electrode and the second sensing electrode in the Y-axis direction may be coupled to be connected to the first terminal of the differential amplifier, the signals of the second vibrating electrode and the first sensing electrode may be coupled to be connected to the second terminal of the differential amplifier, and the differential amplifier may amplify two signal differences and transfer the two amplified signal differences to the circuit unit to calculate the acceleration in the Y-axis direction.

The acceleration in the Y-axis direction due to the difference value of the differential amplifier may be Ay=(SY1 +DY2)-(SY2+DY1), where SY1 is the first sensing electrode, DY2 is the second vibrating electrode, SY2 is the second sensing electrode, and DY1 is the first vibrating electrode.

The vibrating electrode may include the first and second vibrating electrodes in the X-axis direction and the first and second vibrating electrodes in the Y-axis direction, the sensing electrode may include the first and second sensing electrodes in the X-axis direction and the first and second sensing electrodes in the Y-axis direction, and the differential amplifier may include first, second, and third differential amplifiers, and the signals of the vibrating electrode and the sensing electrode may be each transferred to the first and second terminals of the first and second differential amplifiers, the first and second differential amplifiers may amplify the signal difference and transfer the amplified signal difference to the third differential amplifier, and the third differential amplifier may amplify the signal difference of the first and second differential amplifiers and transfer the amplified signal difference to the circuit unit to calculate the acceleration in the X-axis and Y-axis directions.

The first vibrating electrode in the X-axis direction may be connected to the first terminal of the first differential amplifier, the second vibrating electrode may be connected to the second terminal of the first differential amplifier to amplify two signal differences and transfer the two amplified signal differences to the third differential amplifier through the first terminal of the third differential amplifier, the first sensing electrode in the X-axis direction may be connected to the first terminal of the second differential amplifier and the second vibrating electrode may be connected to the second terminal of the second differential amplifier to amplify two signal differences and transfer the two amplified signal differences to the third differential amplifier through the second terminal of the third differential amplifier, and the third differential amplifier may amplify the signal difference of the first and second terminals and transfer the amplified signal difference to the circuit unit.

The acceleration in the X-axis direction due to the difference value of the first, second, and third differential amplifiers may be Ax=(SX1-SX2)-(DX1-DX2), where SX1 is the first sensing electrode in the X-axis direction, SX2 is the second sensing electrode in the X-axis direction, DX1 is the first vibrating electrode in the X-axis direction, and DX2 is the second vibrating electrode in the X-axis direction.

The first vibrating electrode in the Y-axis direction may be connected to the first terminal of the first differential amplifier and the second vibrating electrode may be connected to the second terminal of the first differential amplifier to amplify two signal differences and transfer the two amplified signal differences to the third differential amplifier through the first terminal of the third differential amplifier, the first sensing electrode in the Y-axis direction may be connected to the first terminal of the second differential amplifier and the second vibrating electrode may be connected to the second terminal of the second differential amplifier to amplify two signal differences and transfer the two amplified signal differences to the third differential amplifier through the second terminal of the third differential amplifier, and the third differential amplifier may amplify the signal difference of the first and second terminals and transfer the amplified signal difference to the circuit unit.

The acceleration in the Y-axis direction due to the difference value of the first, second, and third differential amplifiers may be Ay=(SY1-SY2)-(DY1-DY2), where SY1 is the first sensing electrode in the Y-axis direction, SY2 is the second sensing electrode in the Y-axis direction, DY1 is the first vibrating electrode in the Y-axis direction, and DY2 is the second vibrating electrode in the Y-axis direction.

The signals of the first and second sensing electrodes in the X-axis direction and the first and second sensing electrodes in the Y-axis direction may be coupled to be connected to the first terminal of the differential amplifier, and the signals of the first and second vibrating electrodes in the X-axis direction and the first and second vibrating electrodes in the Y-axis direction may be coupled to be connected to the second terminal of the differential amplifier to amplify two signal differences and transfer the two amplified signal differences to the circuit unit, thereby calculating the acceleration in the Z-axis direction.

The acceleration in the Z-axis direction due to the difference value of the differential amplifier may be Az=(SX1+SY1+SX2+SY2)-(DX1+DY1+DX2+DY2), where SX1 is the first sensing electrode in the X-axis direction, SY1 is the first sensing electrode in the Y-axis direction, SX2 is the second sensing electrode in the X-axis direction, SY2 is the second sensing electrode in the Y-axis direction, DX1 is the first vibrating electrode in the X-axis direction, DY1 is the first vibrating electrode in the Y-axis direction, DX2 is the second vibrating electrode in the X-axis direction, and DY2 is the second vibrating electrode in the Y-axis direction.

The vibrating electrode may include the first and second vibrating electrodes in the X-axis direction and the first and second vibrating electrodes in the Y-axis direction, and the sensing electrode may include the first and second sensing electrodes in the X-axis direction and the first and second sensing electrodes in the Y-axis direction, and the differential amplifier may include first, second, third, fourth, fifth, and sixth differential amplifiers, the signals of the vibrating electrode and the sensing electrode may be transferred to the first and second terminals of the first, second, fourth, and fifth differential amplifiers, respectively, and the first, second, fourth, and fifth differential amplifiers may amplify the signal difference and transfer the amplified signal difference to the third and sixth differential amplifiers, and the third and sixth differential amplifiers may amplify the signal difference and transfer the amplified signal difference of the first, second, fourth, and fifth differential amplifiers to the circuit unit to calculate the acceleration in the Z-axis direction.

The first vibrating electrode in the X-axis direction may be connected to the first terminal of the first differential amplifier and the first sensing electrode may be connected to the second terminal of the first differential amplifier to amplify two signal differences and transfer the two amplified signal differences to the third differential amplifier through the first terminal of the third differential amplifier, the first vibrating electrode in the Y-axis direction may be connected to the first terminal of the second differential amplifier and the first sensing electrode may be connected to the second terminal of the second differential amplifier to amplify two signal differences and transfer the two amplified signal differences to the third differential amplifier through the second terminal of the third differential amplifier and the third differential amplifier may amplify the signal difference of the first and second terminals, the second sensing electrode in the X-axis direction may be connected to the first terminal of the fourth differential amplifier and the second vibrating electrode may be connected to the second terminal of the fourth differential amplifier to amplify two signal differences and transfer the two amplified signal differences to the sixth differential amplifier through the first terminal of the sixth differential amplifier, the second sensing electrode in the Y-axis direction may be connected to the first terminal of the fifth differential amplifier and the second vibrating electrode may be connected to the second terminal of the fifth differential amplifier to amplify two signal differences and transfer the two amplified signal differences to the sixth differential amplifier through the second terminal of the sixth differential amplifier, and the sixth differential amplifier may amplify the signal difference of the first and second terminals and transfer the amplified signal difference to the circuit unit to calculate the acceleration in the Z-axis direction.

The acceleration in the Z-axis direction due to the difference value of the first, second, third, fourth, fifth, and sixth differential amplifiers may be Az=[(SX1-DX1)-(DY1-SY1)]+[(SX2-DX2)-(DY2-SY2)], where SX1 is the first sensing electrode in the X-axis direction, SY1 is the first sensing electrode in the Y-axis direction, SX2 is the second sensing electrode in the X-axis direction, SY2 is the second sensing electrode in the Y-axis direction, DX1 is the first vibrating electrode in the X-axis direction, DY1 is the first vibrating electrode in the Y-axis direction, DX2 is the second vibrating electrode in the X-axis direction, and DY2 is the second vibrating electrode in the Y-axis direction.

### BRIEF DESCRIPTION OF THE DRAWINGS

FIG. 1 is a plan view schematically showing an inertial sensor according to a preferred embodiment of the present invention;
FIG. 2 is a cross-sectional view schematically showing the inertial sensor according to the preferred embodiment of the present invention;
FIG. 3 is a schematic partial circuit diagram for sensing X-axis and Y-axis directions of an inertial sensor according to a first preferred embodiment of the present invention;
FIG. 4 is a schematic partial circuit diagram for sensing X-axis and Y-axis directions of an inertial sensor according to a second preferred embodiment of the present invention;
FIG. 5 is a schematic partial circuit diagram for sensing a Z-axis direction of the inertial sensor according to the first preferred embodiment of the present invention; and
FIG. 6 is a schematic partial circuit diagram for sensing the Z-axis direction of the inertial sensor according to the second preferred embodiment of the present invention.

### DESCRIPTION OF THE PREFERRED EMBODIMENTS

Various objects, advantages and features of the invention will become apparent from the following description of embodiments with reference to the accompanying drawings.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

The above and other objects, features and advantages of the present invention will be more clearly understood from the following detailed description taken in conjunction with the accompanying drawings. In the specification, in adding reference numerals to components throughout the drawings, it is to be noted that like reference numerals designate like components even though components are shown in different drawings. Further, in describing the present invention, a detailed description of related known functions or configurations will be omitted so as not to obscure the subject of the present invention.

Hereinafter, an inertial sensor according to preferred embodiments of the present invention will be described with reference to the accompanying drawings.

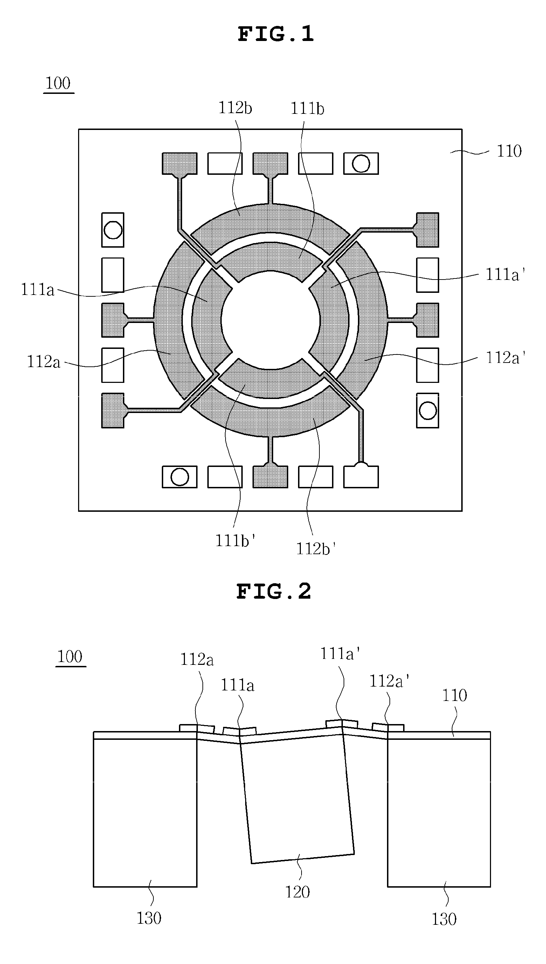

FIG. 1 is a schematic plan view of an inertial sensor according to the preferred embodiment of the present invention and FIG. 2 is a cross-sectional view of the inertial sensor according to the preferred embodiment of the present invention. As shown, an inertial sensor 100 includes a flexible substrate part 110, a driving body 120, a support part 130, a displacement detection unit having a sensing electrode detecting displacement of the driving body, and a vibrating unit having a vibrating electrode vibrating the driving body.

In more detail, the flexible substrate part 110 includes a flexible substrate, a piezoelectric element (PZT), and an electrode, wherein the flexible substrate is made of a silicon or silicon-on-insulator (SOI) substrate and is deposited with the piezoelectric element and the electrode. The electrode is configured to include sensing electrodes 111a, 111a', 111b, and 111b' and vibrating electrodes 112a, 112a', 112b, and 112b'.

In addition, the vibrating electrode is configured to include the first and second vibrating electrodes 112b and 112b' in an X-axis direction and the first and second vibrating electrodes 112a and 112a' in the Y-axis direction and the sensing electrode is configured to include the first and second sensing electrodes 111b and 111b' in the X-axis direction and the first and second sensing electrodes 111a and 111a' in the Y-axis direction.

The sensing electrodes 111a, 111a', 111b, and 111b' and the vibrating electrodes 112a, 112a', 112b, and 112b' are formed on the top portion of the flexible substrate part 110 in a circular strip shape while they are predeterminedly separated from each other and the sensing electrodes are adjacently disposed based on the center of the driving body, as compared to the vibrating electrode.

In addition, the bottom portion of the flexible substrate part 110 is displaceably provided with the driving body 120 and the support part 130 to support the driving body 120 in a floating state. That is, the support part 130 supports the driving body 120 and the flexible substrate 110 and supports to freely move the driving body 120 in a floating state.

The inertial sensor 100 configured as above and according to the preferred embodiment of the present invention at the time of detecting the angular velocity vibrates the driving body 120 due to the application of the driving signal to the vibrating electrode 112 of the flexible substrate part 110, generates the charges having specific polarity in the sensing electrode due to the vibration of the driving body 120, and detects the charges, thereby measuring the direction and magnitude of the angular velocity.

At the time of detecting the acceleration, the inertial sensor generates the charges having specific polarity in the sensing electrode due to the movement of the driving body 120 and detects the charges, thereby measuring the direction and magnitude of the acceleration.

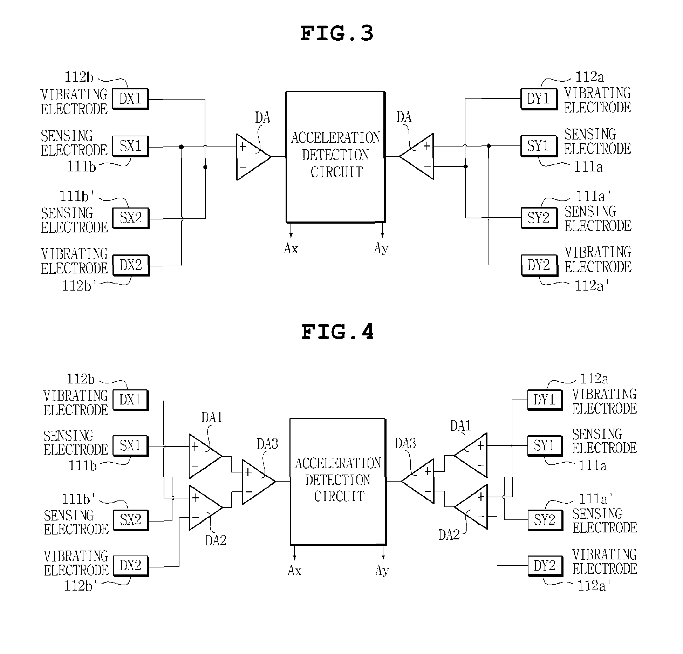

FIG. 3 is a schematic partial circuit diagram for sensing X-axis and Y-axis directions of an inertial sensor according to a first preferred embodiment of the present invention. As shown, the vibrating electrode is configured to include the first and second vibrating electrodes 112b and 112b' in the X-axis direction and the first and second vibrating electrodes 112a and 112a' in the Y-axis direction and the sensing electrode is configured to include the first and second sensing electrodes 111b and 111b' in the X-axis direction and the first and second sensing electrodes 111a and 111a' in the Y-axis direction.

Further, the sensing electrodes 111a, 111a', 111b, and 111b' and the vibrating electrodes 112a, 112a', 112b, and 112b' are connected to an acceleration detection circuit through a differential amplifier DA and calculates acceleration Ax in the X-axis direction, acceleration Ay in the Y-axis direction, and acceleration Az in the Z-axis direction.

In more detail, signals of the first vibrating electrode 112b (DX1) and the second sensing electrode 111b' (SX2) in the X-axis direction are coupled to be transferred to a first terminal of the differential amplifier DA and signals of the second vibrating electrode 112b' (DX2) and the first sensing electrode 111b (SX1) are coupled to be transferred to a second terminal of the differential amplifier DA, thereby amplifying two signal differences in the differential amplifier.

Further, signals of the first vibrating electrode 112a (DY1) and the second sensing electrode 111a' (SY2) in the Y-axis direction are coupled to be transferred to the first terminal of the differential amplifier DA and signals of the second vibrating electrode 112a' (DY2) and the first sensing electrode 111a (SY1) are coupled to be transferred to the second terminal of the differential amplifier DA, thereby amplifying two signal differences in the differential amplifier.

Further, the difference values are amplified in the differential amplifier and are transferred to the acceleration detection circuit and the acceleration in the X-axis direction and the acceleration in the Y-axis direction are calculated in the acceleration detection circuit.

In more detail, due to the difference values of the differential amplifier, the acceleration in the X-axis direction is calculated as Ax=(SX1+DX2)-(SX2+DX1) and the acceleration in the Y-axis direction is calculated as Ay=(SY1+DY2)-(SY2+DY1). According to the configuration as described above, measurement sensitivity is improved by adding the values of the vibrating electrodes DX1, DX2, DY1, and DY2 that are not considered at the time of calculating the acceleration according to the prior art.

FIG. 4 is a schematic partial circuit diagram for sensing X-axis and Y-axis directions of an inertial sensor according to a second preferred embodiment of the present invention. As shown, the vibrating electrode is configured to include the first and second vibrating electrodes 112b and 112b' in the X-axis direction and the first and second vibrating electrodes 112a and 112a' in the Y-axis direction and the sensing electrode is configured to include the first and second sensing electrodes 111b and 111 b' in the X-axis direction and the first and second sensing electrodes 111a and 111 a' in the Y-axis direction. The sensing electrodes 111a, 111a', 111b, and 111b' and the vibrating electrodes 112a, 112a', 112b, and 112b' are connected to the acceleration detection circuit through a plurality of differential amplifiers DA1, DA2, and DA3 and calculates the acceleration Ax in the X-axis direction and the acceleration Ay in the Y-axis direction.

In more detail, the first sensing electrode 111b (SX1) in the X-axis direction is connected to the first terminal of the first differential amplifier DA1 and the second vibrating electrode 111b' (DX2) is connected to the second terminal of the first differential amplifier DA1 to amplify two signal differences and transfer the two amplified signal differences to a third differential amplifier through the first terminal of the third differential amplifier DA3.

Further, the first vibrating electrode 112b (DX1) in the X-axis direction is connected to the first terminal of the second differential amplifier DA2 and the second sensing electrode 112b' (SX2) is connected to the second terminal of the second differential amplifier DA2 to amplify two signal differences and transfer the two amplified signal differences to a third differential amplifier DA3 through the second terminal of the third differential amplifier DA3.

Further, the signal differential of the first and second terminals is amplified in the third differential amplifier DA3 and is transferred to the acceleration detection circuit, thereby calculating the acceleration Ax in the X-axis direction.

Next, the first sensing electrode 111a (SY1) in the Y-axis direction is connected to the first terminal of the first differential amplifier DA1 and the second sensing electrode 111a' (SY2) is connected to the second terminal of the first differential amplifier DA1 to amplify two signal differences and transfer the two amplified signal differences to the third differential amplifier through the second terminal of the third differential amplifier DA3.

Further, the first vibrating electrode 112a (DY1) in the Y-axis direction is connected to the first terminal of the second differential amplifier DA2 and the second vibrating electrode 112a' (DY2) is connected to the second terminal of the second differential amplifier DA2 to amplify two signal differences and transfer the two amplified signal differences to the third differential amplifier through the first terminal of the third differential amplifier DA3.

Further, the signal difference of the first and second terminals is amplified in the third differential amplifier DA3 and is transferred to the acceleration detection circuit.

The acceleration detection circuit calculates the acceleration in the X-axis direction and the acceleration in the Y-axis direction. In more detail, due to the difference values of the differential amplifier, the acceleration in the X-axis direction is calculated as Ax=(SX1-SX2)-(DX1-DX2) and the acceleration in the Y-axis direction is calculated as Ay=(SY1-SY2)-(DY1-DY2). Due to the above configuration, the noise may be further reduced, the magnitude of the signal may be amplified to be larger, and the measuring sensitivity may be improved, as compared with the schematic partial circuit diagram for sensing the X-axis and Y-axis directions of the inertial sensor according to the first preferred embodiment.

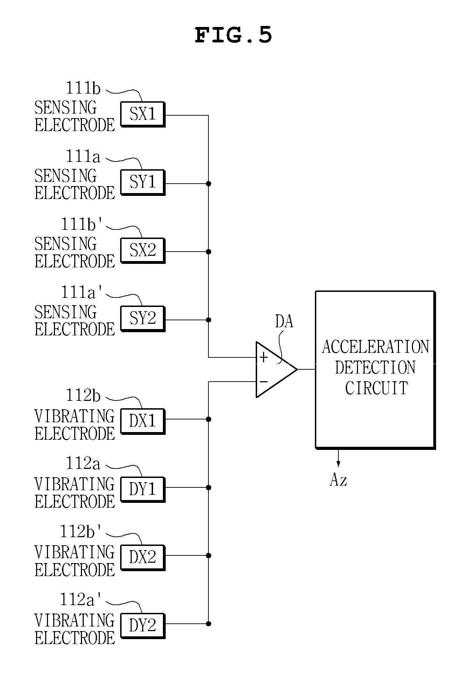

FIG. 5 is a schematic partial circuit diagram for sensing the Z-axis direction of the inertial sensor according to the first preferred embodiment of the present invention. As shown, the first and second sensing electrodes 111a, 111a', 111b, and 111b' and the first and second vibrating electrodes 112a, 112a', 112b, and 112b' are connected to the acceleration detection circuit through the differential amplifier and calculates the acceleration Az in the Z-axis direction.

In more detail, the signals of the first and second sensing electrodes (SX1, SY1, SX2, and SY2) 111b, 111a, 111b', and 111a' in the X-axis and Y-axis directions are coupled to be connected to the first terminal of the differential amplifier DA and the signals of the first and second vibrating electrodes (DX1, DY1, DX2, and DY2) 112b, 112a, 112b', and 112a' in the X-axis and Y-axis directions are coupled to be connected to the second terminal of the differential amplifier DA to amplify two signal differences and transfer the two amplified signal differences to the acceleration detection circuit.

Therefore, the acceleration in the Z-axis direction due to the difference value of the differential amplifier is calculated as Az=(SX1+SY1+SX2+SY2₎-(DX1+DY1+DX2+DY2)_{.} According to the configuration as described above, measurement sensitivity is improved by weighting the values of the vibrating electrodes DX1, DX2, DY1, and DY2 that are not considered at the time of calculating the acceleration according to the prior art.

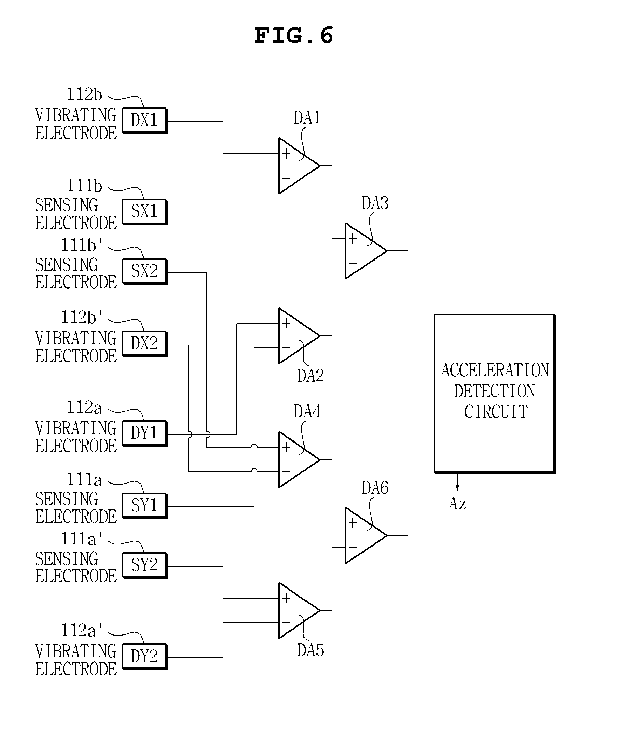

FIG. 6 is a schematic partial circuit diagram for sensing the Z-axis direction of the inertial sensor according to the second preferred embodiment of the present invention.

As shown, the first and second sensing electrodes 111a, 111a', 111b, and 111b' and the first and second vibrating electrodes 112a, 112a', 112b, and 112b' are connected to the acceleration detection circuit through the differential amplifier and calculates the acceleration Az in the Z-axis direction.

In more detail, the first vibrating electrode 112b (DX1) in the X-axis direction is connected to the first terminal of the first differential amplifier DA1 and the first sensing electrode 111b (SX1) is connected to the second terminal of the first differential amplifier DA1 to amplify two signal differences and transfer the amplified two signal differences to a third differential amplifier DA3 through the first terminal of the third differential amplifier DA3.

Further, the first vibrating electrode 112a (DY1) in the Y-axis direction is connected to the first terminal of the second differential amplifier DA2 and the first sensing electrode 111a (SY1) is connected to the second terminal of the second differential amplifier DA2 to amplify two signal differences and transfer the amplified two signal differences to the third differential amplifier through the second terminal of the third differential amplifier DA3.

Further, the signal difference of the first and second terminals is amplified in the third differential amplifier DA3.

Next, the second sensing electrode 111b' (SX2) in the X-axis direction is connected to a first terminal of a fourth differential amplifier DA4 and the second vibrating electrode 112b' (DX2) is connected to the second terminal of the fourth differential amplifier DA4 to amplify two signal differences and transfer the amplified two signal differences to a sixth differential amplifier DA6 through a first terminal of a sixth differential amplifier DA6.

Further, the second sensing electrode 111a' (SY2) in the Y-axis direction is connected to a first terminal of a fifth differential amplifier DA5 and the second vibrating electrode 112a' (DY2) is connected to a second terminal of the fifth differential amplifier DA5 to amplify two signal differences and transfer the two amplified signal differences to the sixth differential amplifier DA6 through the second terminal of the sixth differential amplifier DA6.

Further, the signal difference of the first and second terminals is amplified in the sixth differential amplifier and is transferred to the acceleration detection circuit.

The acceleration in the Z-axis direction is calculated as Az=[(SX1-DX1)-(DY1-SY1)]+[(SX2-DX2)-(DY2-SY2)] that is the acceleration Az in the Z-axis direction due to the difference value of the differential amplifier. Due to the above configuration, noise may be further reduced, the magnitude of the signal may be amplified to be larger, and the measuring sensitivity may be improved, as compared with the schematic partial circuit diagram for sensing the Z-axis direction of the inertial sensor according to the first preferred embodiment.

Consequently, in the inertial sensor configured of the acceleration sensor and the angular velocity sensor, the inertial sensor with improved measurement sensitivity may be obtained by separately measuring the angular velocity and the acceleration in a time division manner, using the vibrating electrode as the sensing electrode in consideration of the fact that there is no need to vibrate the driving body during the measurement of the acceleration, and amplifying the magnitude of the signal through the differential amplifier.

As set forth above, the preferred embodiment of the present invention provides the inertial sensor capable of improving sensitivity for measuring the acceleration by using the vibrating electrode in addition to the sensing electrode at the time of detecting the acceleration.

Although the preferred embodiments of the present invention have been disclosed for illustrative purposes, the inertial sensor according to the present invention is not particularly limited to the foregoing. Those skilled in the art will appreciate that a variety of different modifications, additions and substitutions are possible, without departing from the scope and spirit of the invention.

Accordingly, simple modifications and changes of the present invention should also be understood as falling within the present invention, the scope of which is defined in the appended claims and their equivalents.

## Claims

1. An inertial sensor, comprising:
a driving body displaceably supported on a flexible substrate part in a floating state;
a displacement detection unit having a sensing electrode detecting displacement of the driving body;
a vibrating part having a vibrating electrode vibrating the driving body;
a differential amplifier connected to the sensing electrode and the vibrating electrode; and
a circuit unit connected to the differential amplifier to calculate acceleration and angular velocity,
wherein the acceleration is calculated by using the sensing electrode and the vibrating electrode.

2. The inertial sensor as set forth in claim 1, wherein the vibrating electrode includes first and second vibrating electrodes in an X-axis direction and first and second vibrating electrodes in a Y-axis direction, the sensing electrode includes first and second sensing electrodes in the X-axis direction and first and second sensing electrodes in the Y-axis direction, signals of the vibrating electrode and the sensing electrode are each transferred to first and second terminals of the differential amplifier, and the differential amplifier amplifies a signal difference and transfers the amplified signal difference to the circuit unit to calculate acceleration in the X-axis, Y-axis, and Z-axis directions.

3. The inertial sensor as set forth in claim 2, wherein the signals of the first vibrating electrode and the second sensing electrode in the X-axis direction are coupled to be transferred to the first terminal of the differential amplifier, the signals of the second vibrating electrode and the first sensing electrode are coupled to be transferred to the second terminal of the differential amplifier, and the differential amplifier amplifies two signal differences and transfers the two amplified signal differences to the circuit unit to calculate the acceleration in the X-axis direction.

4. The inertial sensor as set forth in claim 3, wherein the acceleration in the X-axis direction due to the difference value of the differential amplifier is Ax=(SX1+DX2)-(SX2+DX1), where SX1 is the first sensing electrode, DX2 is the second vibrating electrode, SX2 is a second sensing electrode, and DX1 is the first vibrating electrode.

5. The inertial sensor as set forth in claim 2, wherein the signals of the first vibrating electrode and the second sensing electrode in the Y-axis direction are coupled to be connected to the first terminal of the differential amplifier, the signals of the second vibrating electrode and the first sensing electrode are coupled to be connected to the second terminal of the differential amplifier, and the differential amplifier amplifies two signal differences and transfers the amplified two signal differences to the circuit unit to calculate the acceleration in the Y-axis direction.

6. The inertial sensor as set forth in claim 5, wherein the acceleration in the Y-axis direction due to the difference value of the differential amplifier is Ay=(SY1+DY2)-(SY2+DY1), where SY1 is the first sensing electrode, DY2 is the second vibrating electrode, SY2 is the second sensing electrode, and DY1 is the first vibrating electrode.

7. The inertial sensor as set forth in claim 1, wherein the vibrating electrode includes the first and second vibrating electrode in the X-axis direction and the first and second vibrating electrodes in the Y-axis direction, the sensing electrode includes the first and second sensing electrodes in the X-axis direction and the first and second sensing electrodes in the Y-axis direction, and the differential amplifier includes first, second, and third differential amplifiers, and
the signals of the vibrating electrode and the sensing electrode are each transferred to the first and second terminals of the first and second differential amplifiers, the first and second differential amplifiers amplify the signal difference and transfers the amplified signal difference to the third differential amplifier, and the third differential amplifier amplifies the signal difference and transfers the amplified signal difference of the first and second differential amplifiers to the circuit unit to calculate the acceleration in the X-axis and Y-axis directions.

8. The inertial sensor as set forth in claim 7, wherein the first vibrating electrode in the X-axis direction is connected to the first terminal of the first differential amplifier and the second vibrating electrode is connected to the second terminal of the first differential amplifier to amplify two signal differences and transfer the two amplified signal differences to the third differential amplifier through the first terminal of the third differential amplifier,
the first sensing electrode in the X-axis direction is connected to the first terminal of the second differential amplifier and the second vibrating electrode is connected to the second terminal of the second differential amplifier to amplify two signal differences and transfer the two amplified signal differences to the third differential amplifier through the second terminal of the third differential amplifier, and
the third differential amplifier amplifies the signal difference of the first and second terminals and transfers the amplified signal difference to the circuit unit.

9. The inertial sensor as set forth in claim 8, wherein the acceleration in the X-axis direction due to the difference value of the first, second, and third differential amplifiers is Ax=(SX1-SX2)-(DX1-DX2), where SX1 is the first sensing electrode in the X-axis direction, SX2 is the second sensing electrode in the X-axis direction, DX1 is the first vibrating electrode in the X-axis direction, and DX2 is the second vibrating electrode in the X-axis direction.

10. The inertial sensor as set forth in claim 7, wherein the first vibrating electrode in the Y-axis direction is connected to the first terminal of the first differential amplifier and the second vibrating electrode is connected to the second terminal of the first differential amplifier to amplify two signal differences and transfer the two amplified signal differences to the third differential amplifier through the first terminal of the third differential amplifier,
the first sensing electrode in the Y-axis direction is connected to the first terminal of the second differential amplifier and the second vibrating electrode is connected to the second terminal of the second differential amplifier to amplify two signal differences and transfer the two amplified signal differences to the third differential amplifier through the second terminal of the third differential amplifier, and
the third differential amplifier amplifies the signal difference of the first and second terminals and transfers the amplified signal difference to the circuit unit.

11. The inertial sensor as set forth in claim 10, wherein the acceleration in the Y-axis direction due to the difference value of the first, second, and third differential amplifiers is Ay=(SY1-SY2)-(DY1-DY2), where SY1 is the first sensing electrode in the Y-axis direction, SY2 is the second sensing electrode in the Y-axis direction, DY1 is the first vibrating electrode in the Y-axis direction, and DY2 is the second vibrating electrode in the Y-axis direction.

12. The inertial sensor as set forth in claim 2, wherein the signals of the first and second sensing electrodes in the X-axis direction and the first and second sensing electrodes in the Y-axis direction are coupled to be connected to the first terminal of the differential amplifier, and the signals of the first and second vibrating electrodes in the X-axis direction and the first and second vibrating electrodes in the Y-axis direction are coupled to be connected to the second terminal of the differential amplifier to amplify two signal differences and transfer the two amplified signal differences to the circuit unit, thereby calculating the acceleration in the Z-axis direction.

13. The inertial sensor as set forth in claim 2, wherein the acceleration in the Z-axis direction due to the difference value of the differential amplifier is Az=(SX1+SY1+SX2+SY2)-(DX1+DY1+DX2+DY2), where SX1 is the first sensing electrode in the X-axis direction, SY1 is the first sensing electrode in the Y-axis direction, SX2 is the second sensing electrode in the X-axis direction, SY2 is the second sensing electrode in the Y-axis direction, DX1 is the first vibrating electrode in the X-axis direction, DY1 is the first vibrating electrode in the Y-axis direction, DX2 is the second vibrating electrode in the X-axis direction, and DY2 is the second vibrating electrode in the Y-axis direction.

14. The inertial sensor as set forth in claim 1, wherein the vibrating electrode includes the first and second vibrating electrodes in the X-axis direction and the first and second vibrating electrodes in the Y-axis direction, and the sensing electrode includes the first and second sensing electrodes in the X-axis direction and the first and second sensing electrodes in the Y-axis direction, and the differential amplifier includes first, second, third, fourth, fifth, and sixth differential amplifiers,
the signals of the vibrating electrode and the sensing electrode are transferred to the first and second terminals of the first, second, fourth, and fifth differential amplifiers, respectively, and the first, second, fourth, and fifth differential amplifiers amplify the signal difference and transfer the amplified signal difference to the third and sixth differential amplifiers, and
the third and sixth differential amplifiers amplify the signal difference of the first, second, fourth, and fifth differential amplifiers and transfer the amplified signal difference to the circuit unit to calculate the acceleration in the Z-axis direction.

15. The inertial sensor as set forth in claim 14, wherein the first vibrating electrode in the X-axis direction is connected to the first terminal of the first differential amplifier and the first sensing electrode is connected to the second terminal of the first differential amplifier to amplify two signal differences and transfer the two amplified signal differences to the third differential amplifier through the first terminal of the third differential amplifier,
the first vibrating electrode in the Y-axis direction is connected to the first terminal of the second differential amplifier and the first sensing electrode is connected to the second terminal of the second differential amplifier to amplify two signal differences and transfer the two amplified signal differences to the third differential amplifier through the second terminal of the third differential amplifier and the third differential amplifier amplifies the signal difference of the first and second terminals,
the second sensing electrode in the X-axis direction is connected to the first terminal of the fourth differential amplifier and the second vibrating electrode is connected to the second terminal of the fourth differential amplifier to amplify two signal differences and transfer the amplified two signal differences to the sixth differential amplifier through the first terminal of the sixth differential amplifier,
the second sensing electrode in the Y-axis direction is connected to the first terminal of the fifth differential amplifier and the second vibrating electrode is connected to the second terminal of the fifth differential amplifier to amplify two signal differences and transfer the amplified two signal differences to the sixth differential amplifier through the second terminal of the sixth differential amplifier, and
the sixth differential amplifier amplifies the signal difference of the first and second terminals and transfers the amplified signal difference to the circuit unit to calculate the acceleration in the Z-axis direction.

16. The inertial sensor as set forth in claim 15, wherein the acceleration in the Z-axis direction due to the difference value of the first, second, third, fourth, fifth, and sixth differential amplifiers is Az=[(SX1-DX1)-(DY1-SY1)]+[(SX2-DX2)-(DY2-SY2)], where SX1 is the first sensing electrode in the X-axis direction, SY1 is the first sensing electrode in the Y-axis direction, SX2 is the second sensing electrode in the X-axis direction, SY2 is the second sensing electrode in the Y-axis direction, DX1 is the first vibrating electrode in the X-axis direction, DY1 is the first vibrating electrode in the Y-axis direction, DX2 is the second vibrating electrode in the X-axis direction, and DY2 is the second vibrating electrode in the Y-axis direction.
